# EUROPÄISCHE PATENTSCHRIFT

(11) **EP 1 068 246 B1**
(45) Veröffentlichungstag und Bekanntmachung des Hinweises auf die Patenterteilung: **18.09.2002**
(21) Anmeldenummer: 99908955.0
(22) Anmeldetag: 11.03.1999
(51) Int. Cl.: C08F 14/18, C08F 2/06

(54) **VERFAHREN ZUR HERSTELLUNG VON TEILFLUORIERTEN FLUORPOLYMEREN**
METHOD FOR THE PRODUCTION OF PARTIALLY FLUORINATED FLUOROPOLYMERS
PROCEDE DE PRODUCTION DE POLYMERES FLUORO-CARBONES PARTIELLEMENT FLUORES

(30) Priorität: 23.03.1998 DE 19812755
(43) Veröffentlichungstag der Anmeldung: 17.01.2001
(73) Patentinhaber: Bayer Aktiengesellschaft, 51368 Leverkusen (DE)
(72) Erfinder: KRÜGER, Ralf, D-51467 Bergisch Gladbach (DE); HEILIG, Gerhard, D-51467 Bergisch Gladbach (DE); SOMMERFELD, Claus-Dieter, D-51491 Overath (DE)
(86) Internationale Anmeldenummer: EP9901555
(87) Internationale Veröffentlichungsnummer: WO99048937

(56) Entgegenhaltungen:
- EP-A1- 0 723 979
- US-A- 4 243 770
- US-A- 5 494 984
- US-A1- 5 182 342

## Beschreibung

Die vorliegende Erfindung betrifft ein Verfahren zur Herstellung von teilfluorierten Fluorpolymeren, wonach Fluormonomere in Gegenwart von Polyfluorpropanen oder Polyfluorbutanen der Formel CF₃-CH₂-CF₂H, CF₃-CHF-CF₂H, CF₃-CH₂-CF₃, CHF₂-CF₂-CH₂F, CF₃-CH₂-CF₂-CH₃ und CF₃-CHF-CF₂-CH₃ sowie gegebenenfalls eines Molekulargewichtsreglers radikalisch polymerisiert werden.

Die Herstellung von Fluorpolymeren im technischen Maßstab erfolgt im wesentlichen nach den bekannten wäßrigen Verfahren der Emulsions- oder Suspensionspolymerisation, wie z.B in Modern Fluorpolymers, John Wiley & Sons Ltd., Chichester, 1997, S. 77 und 609 beschrieben. Dabei werden wasserlösliche Hilfsstoffe, wie fluorierte Emulgatoren, Dispergatoren, Initiatoren etc. benötigt, die nach der Aufarbeitung der resultierenden Polymerdispersion teils im Produkt teils im Abwasser wiederzufinden sind und dort Probleme im Hinblick auf Produkteigenschaften bzw. Umweltverträglichkeit des Verfahrens bereiten.

Nichtwäßrige Verfahren beruhten bislang auf Fluorchlorkohlenstoffverbindungen, wie 1,2-Dichlortetrafluorethan oder 1,1,2-Trichlortrifluorethan. Diese besitzen jedoch ein erhebliches Ozonschädigungspotential, weshalb ihr technischer Einsatz in vielen Industrieländern bereits verboten ist.

In US-A 4 243 770 wird die Möglichkeit erwähnt, neben besagten Fluorchlorkohlenstoffen andere inerte fluorhaltige Verbindungen, wie Perfluor(1,2-dimethylcyclobutan), Perfluorcyclohexan, Perfluor(tributylamin) sowie Verbindungen des Typs H(CF₂)ₙH und CF₃O(C₂F₄O)ₙCF₂CF₃ als Lösungsmittel für die Polymerisation von Fluormonomeren zu nutzen.

Aus US-A 5 182 342 ist für diesen Zweck die Verwendung von Fluorkohlenwasserstoffen, die bestimmte Kriterien in bezug auf das F/H-Verhältnis sowie die Lage der Wasserstoffatome erfüllen und gegebenenfalls Ethersauerstoffatome enthalten können, wie z.B 1,1,2,2-Tetrafluorcyclobutan, 1-Trifluormethyl-1,2,2-trifluorcyclobutan, CF₃(CF₂)ₙCFH(CF₂)ₘCF₃, CF₃(CF₂)ₙCFHCFH(CF₂)ₘCF₃, CF₃(CF₂)ₙCH₂(CF₂)ₘCF₃, CF₃(CF₂)ₙCFHCH₂(CF₂)ₘCF₃, C₄F₉CH₂CH₂C₄F₉, bekannt. Ausdrücklich ausgeschlossen werden dabei jedoch Verbindungen, die mit Ausnahme der zulässigen Struktureinheit -CF₂OCH₃ ein Wasserstoffatom am endständigen (primären) C-Atom besitzen.

Fluorkohlenwasserstoffe mit endständigen Wasserstoffatomen, z.B. CF₃(CF₂)ₙH, CF₃(CF₂)ₙCH₂CH₃, sowie solche vom Typ CF₃CF(CF₃)CFHCFHCF₃ werden in US-A 5 494 984 neben oben bereits zitierten als Polymerisationsmedien für Fluormonomere beschrieben.

Bislang war es nicht möglich Fluorkohlenwasserstoffe mit weniger als 4 C-Atomen in den bekannten Verfahren zur Herstellung von Fluorpolymeren einzusetzen. Ebenso handelt es sich bei den bislang eingesetzten Verbindungen um sehr hochfluorierte Verbindungen, in denen teilfluorierte Fluorpolymere, die neben fluorsubstituierten Kohlenstoffatomen auch -CH₂-Sequenzen aufweisen, sehr schlecht löslich sind. Darüberhinaus ist keine dieser Verbindungen im Hinblick auf Preis und Verfügbarkeit als Polymerisationsmedium geeignet. Ihre Herstellung erfolgt in der Regel durch Oligomerisierung/Telomerisation von Fluormonomeren (Tetrafluorethylen, Hexafluorpropen, Hexafluorpropenoxid) und anschließende Hydrierung oder Fluorwasserstoff-Addition.

Eine Erhöhung des H/F-Verhältnisses als Voraussetzung für eine Verbesserung der Polymerlöslichkeit hat jedoch in der Regel eine Zunahme des Übertragungspotentials zur Folge, was für ein Polymerisationslösungsmittel unerwünscht ist, da dies meist auch mit einer abbrechenden Kettenübertragung verbunden ist .

Aufgabe der vorliegenden Erfindung war es daher, ein einfaches Herstellverfahren für teilfluorierte Fluorpolymere zu finden, das ohne den Einsatz ozonschädigender Verbindungen auskommt.

Es wurde nun gefunden, daß über den Einsatz bestimmter Polyfluorpropane oder Polyfluorbutane die Herstellung von teilfluorierten Fluorpolymeren auf sehr einfache Weise möglich ist.

Gegenstand der vorliegenden Erfindung ist ein Verfahren zur Herstellung teilfluorierter Fluorpolymere, wonach Fluormonomere in Gegenwart von Fluorkohlenwasserstoffen der Formeln CF₃-CH₂-CF₂H, CF₃-CHF-CF₂H, CHF₂-CF₂-CH₂F,CF₃-CH₂-CF₂-CH₃ und/oder CF₃-CHF-CF₂-CH₃, vorzugsweise 1,1,1,3,3-Pentafluorpropan, sowie gegebenenfalls eines Molekulargewichtsreglers radikalisch polymerisiert werden.

Teilfluorierte Fluorpolymere im Sinne der Erfindung, besitzen eine aus Kohlenstoffatomen gebildete Hauptkette, die neben fluorsubstituierten Sequenzen auch -CH₂-Sequenzen aufweist. Diese können entweder Homo- oder Copolymere des Vinylidenfluorids mit anderen fluorierten sowie nicht fluorierten Monomeren oder Copolymere aus fluorierten Monomeren, die keinen Wasserstoff enthalten, mit nicht fluorierten Monomeren sein.

Als Fluormonomere können im Sinne der Erfindung fluorierte, gegebenenfalls substituierte Ethylene eingesetzt werden, die neben Fluor Wasserstoff und/oder Chlor enthalten können, wie z.B. Vinylidenfluorid, Tetrafluorethylen und Chlortrifluorethylen, fluorierte 1-Alkene mit 2-8 Kohlenstoffatomen, wie z.B. Hexafluorpropen, 3,3,3-Trifluorpropen, Chlorpentafluorpropen, Hexafluorisobuten und/oder perfluorierte Vinylether der Formel CF₂=CF-O-X mit X = C₁-C₃-Perfluoralkyl oder -(CF₂-CFY-O)ₙ-R_{F}, wobei n = 1-4, Y = F oder CF₃ und R_{F} = C₁-C₃-Perfluoralkyl bedeuten.

Desweiteren können zusätzlich nicht fluorhaltige, mit Fluormonomeren copolymerisierbare Olefine, wie Ethylen, Propen, Isobuten, Alkyl-vinyl-ether oder Vinylester, wie z.B. Vinylacetat als Comonomere eingesetzt werden.

Beispiele für derartige Copolymerkombinationen sind beispielsweise Vinylidenfluorid/Hexafluorpropen sowie gegebenenfalls Tetrafluorethylen und/oder Perfluor-(methyl-vinyl-ether), Tetrafluorethylen/Ethylen, Tetrafluorethylen/Vinylidenfluorid, Tetrafluorethylen/Propen, Tetrafluorethylen/Propen/Vinylidenfluorid sowie Tetrafluorethylen/Vinylacetat.

Daneben ist die Mitverwendung von copolymerisierbaren iod- oder bromhaltigen Monomeren, wie z.B. Bromtrifluorethylen, 4-Brom-3,3,4,4-tetrafluorbuten-1. wie in US-A 4035565 beschrieben, oder 1-Brom-2,2-difluorethylen zur Herstellung peroxidisch vernetzbarer Fluorkautschuke möglich.

In einer bevorzugten Ausführungsform der Erfindung ist zusätzlich Wasser zugegen in einer Menge von 10 bis 900 Gewichtsteilen auf 100 Teilen der erfindungsgemäß eingesetzten Polyfluorpropene bzw. Polyfluorbutane.

Die radikalische Polymerisation wird vorzugsweise mittels Initiatoren gestartet.

Als Initiator werden vorzugsweise organische oder fluororganische Dialkylperoxide, Diacylperoxide, Dialkylperoxydicarbonate, Alkylperester und/oder Perketale eingesetzt, wie z.B. tert-Butylperoxipivalat, tert-Butylperoxi-2-ethyl-hexanoat, Dicyclohexylperoxidicarbonat, Bis(trifluoracetylperoxid) oder das Peroxid des Hexafluorpropenoxiddimeren {(CF₃CF₂CF₂OCF(CF₃)COO}₂. Welcher Initiator eingesetzt wird und in welcher Menge hängt von der jeweiligen Reaktionstemperatur ab, bei der die Halbwertszeiten des auszuwählenden Peroxids zwischen 30 und 500 min liegen sollten. Bevorzugt sind Mengen zwischen 0,05 bis 1,0 Gew.-Teile Peroxid pro 100 Gew.-Teile umzusetzender Monomere.

Bei der Durchführung der Polymerisation als Suspensions- oder Emulsionspolymerisation in Gegenwart von Wasser, das zusätzlich zu den erfindungsgemäßen Fluorkohlenwasserstoffen zugegeben wird, können auch wasserlösliche Initiatoren oder Redoxsysteme, bei denen eine oder beide Komponenten (Reduktions- und Oxydationsmittel) wasserlöslich sind, eingesetzt werden, wie z.B. Kaliumperoxidisulfat, Kaliumpermanganat/Oxalsäure oder Peroxidisulfat/ Perfluoralkylsulfinat.

Die Molekulargewichte und somit Viskositäten der Zielprodukte können über die Initiatormenge oder durch Zugabe eines oder mehrerer Molekulargewichtsregler eingestellt werden.

Als Molekulargewichtsregler werden vorzugsweise Verbindungen der Formel (III)

R³BrₐI_{b} (III)

mit a bzw. b = 0 bis 2 und a + b = 1 oder 2,
wobei R³ ein aliphatischer Kohlenwasserstoff-, Fluorkohlenwasserstoff-, Fluorchlorkohlenwasserstoff- oder Fluorkohlenstoffrest mit 1-8 Kohlenstoffatomen sein kann, eingesetzt. Bei diesen handelt es sich z.B. um 1,2-Dibrom-1-chlortrifluorethan und/oder 1-Brom-2-iod-tetrafluorethan. Besondes bevorzugt sind diiodorganische Verbindungen, in denen die beiden Iodatome an dasselbe oder an unterschiedlichen Kohlenstoffatome gebunden sind. Ganz besonders bevorzugt sind Kohlenwasserstoff- oder Fluorkohlenstoffverbindungen mit einem oder 4 Kohlenstoffatomen, wobei sich das Iod an den endständigen Kohlenstoffatomen befindet. Ebenfalls ganz besonders bevorzugt sind Diiodmethan und/oder 1,4-Diiodperfluorbutan. Die Menge an diiodorganischer Verbindung beträgt vorzugsweise 0,1 - 3,0 Gew.-Teile Iod pro 100 Gew.-Teile polymerisiertem Fluormonomer.

Die in dem erfindungsgemäßen Verfahren eingesetzten Polyfluorpropane oder Polyfluorbutane weisen vorzugsweise ein H/F-Verhältnis von 1/3 bis 3/3 auf.

Durch die spezielle Verteilung der Wasserstoffatome ist sichergestellt, daß keine die Reaktion oder die Produkteigenschaften beeinträchtigenden Übertragungen vom Lösungsmittel stattfinden. Setzt man z.B. 1,1,1,4,4,4-Hexafluorbutan im Unterschied zum erfindungsgemäß verwendeten 1,1,1,3,3-Pentafluorbutan ein, so ist bereits eine erhebliche Retardierung der Polymerisation zu beobachten.

Die Herstellung der erfindungsgemäß verwendeten Polyfluorpropane oder Polyfluorbutane erfolgt nach bekannten Verfahren (siehe z.B. Zh. Org. Khim. 1980, 1401-1408 und 1982, 946 und 1168; Zh. Org. Khim. 1988, 1558; J. Chem. Soc. Perk. 1, 1980, 2258; J. Chem. Soc. Perk. Trans. 2, 1983, 1713; J. Chem. Soc. C 1969, 1739; Chem. Soc. 1949, 2860; Zh. Anal Khim. 1981 36(6), 1125; J. Fluorine Chem. 1979, 325; Rosz. Chem. 1979 (48), 1697, J. Amer. Chem. Soc. 67, 1195 (1945), 72. 3577 (1950) und 76, 2343 (1954)). Da die Siedepunkte dieser Fluorkohlenwasserstoffe zwischen ca. -1 und 40°C liegen, sind sie nach beendeter Polymerisation leicht aus dem Produkt zu entfernen. Eventuell entstehende Nebenprodukte, die aus dem Initiator und/oder dem Molekulargewichtsregler entstehen können, besitzen höhere Siedepunkte so daß das Lösungsmittel in sehr reiner Form wieder zurückgewonnen werden kann.

Die Reaktionstemperaturen der radikalischen Polymerisation liegen vorzugsweise zwischen 30 und 130°C. Niedrigere Temperaturen führen zu einer drastischen Verlängerung der Laufzeit und zu einem starken Viskositätsanstieg der Polymerlösung, so daß Probleme bezüglich Stoffübergang, Wärmeabführung und Produktaustrag entstehen können. Mit noch höheren Temperaturen läßt sich die Raum-Zeit-Ausbeute nicht mehr wesentlich steigern, während die Produkteigenschaften sich verschlechtern. Ein bevorzugter Temperaturbereich für die Polymerisation ist 60-100°C.

Der Druck bei der Polymerisation hängt von den vorgenannten Bedingungen sowie von der Zusammensetzung des Monomergemisches ab und liegt vorzugsweise zwischen 10 und 100 bar. In dem erfingungsgemäßen Verfahren wird besonders bevorzugt bei Drücken zwischen 15 und 50 bar gearbeitet.

Die radikalische Polymerisation kann im Batch-, Konti- oder Batch/Zulauf-Verfahren in Rührkesselreaktoren durchgeführt werden, wobei das Batch/Zulaufverfahren bevorzugt ist.

Nach Beendigung der Polymerisation kann das Reaktionsgemisch leicht über einen Bodenablaß oder ein Steigrohr aus dem Kessel abgelassen oder gedrückt werden. Die Restmonomere und das Lösungsmittel können dann leicht durch Entspannung vom Polymer abgetrennt werden.

Die Polymerlösung an sich kann jedoch auch ohne weitere Aufarbeitung als Beschichtungsmaterial verwendet werden, was einen weiteren Gegenstand der Erfindung darstellt. Als zu beschichtende Substrate kommen dabei z.B. Metalle, Kunststoffe, Textilien, Leder, Papier und Vliese in Betracht.

Auf Grund der niedrigen Siedepunkte können die erfindungsgemäßen Lösungen auch leicht mittels Eigendruck auf die Substratoberflächen aufgesprüht werden. Falls nach der Auftragung eine Härtung erforderlich ist, können die erfindungsgemäßen Beschichtungen nach bekannten Methoden vernetzt werden, z.B. radikalisch mittels Covernetzer sowie Licht oder Peroxiden, mit Polyaminen oder Polyolen sowie mit Hilfe von Diisocyanaten, wenn das Polymer Hydroxylgruppen enthält.

Fluorkautschuke, die nach dem erfindungsgemäßen Verfahren hergestellt werden, lassen sich nach konventionellen Methoden compoundieren und vemetzen, vgl. Modern Fluorpolymers. John Wiley & Sons Ltd., Chichester, 1997, S. 78, 115, 601. Auf Grund ihrer niedrigen Viskosität bietet sich zur Weiterverarbeitung zu elastischen Formkörpern die vorteilhafte Spritzgußtechnologie an.

Zur Vernetzung sind Bisnucleophile, wie Bisamine, z.B. Hexamethylendiamin, oder Bisphenole, z.B. 2,2-Bis(4-hydroxyphenyl)hexafluorpropan ("Bisphenol AF") in Kombination mit Vernetzungsbeschleunigern, wie quarternäre Phosphonium-, Ammonium- oder Sulfoniumsalze und Säureakzeptoren, wie Magnesiumoxid und Calziumhydroxid geeignet, vgl. A.L. Logothetis in Polym. Sci. 14 (1989) 251-296 und darin zitierte Literatur. Alternativ können Fluorkautschuke, die nach dem erfindungsgemäßen Verfahren hergestellt worden sind und kovalent an der Kohlenstoffhaupt- oder -seitenkette gebundenes Brom und/oder Iod enthalten, durch organische Peroxide wie 2,5-Dimethyl-2,5-bis(tertiärbutyl)-hexan in Kombination mit Covernetzern wie Triallylisocyanurat (siehe z.B. EP-A 398 241) vernetzt werden.

Ein weiterer Gegenstand der Erfindung ist zudem die Verwendung von 1,1,1,3,3-Pentafluorpropan als Prozeßlösungsmittel für die Polymeerisation von Fluormonomeren.

Die nachstehenden Beispiele dienen der Erläuterung der Erfindung, ohne jedoch limitierend zu wirken.

### Ausführungsbeispiele:

### Beispiel 1

Ein geschlossener und auf ≤ 5°C gekühlter 4,1 1-Autoklav wurde durch dreimaliges Evakuieren und Belüften mit Stickstoff inertisiert. Über einen ebenfalls inertisierten Schlauch wurde eine Lösung aus 836 g 1,1,1,3,3-Pentafluorpropan und 18,6 g 1,2-Dibromchlortrifluorethan eingesaugt. Anschließend wurden 440 g Vinylidenfluorid (VDF) und 1028 g Hexafluorpropen (HFP) zugegeben und das Reaktionsgemisch unter Rühren auf 80°C erwärmt. Nach Erreichen dieser Temperatur betrug der Autoklaveninnendruck 34 bar. Die Polymerisation wurde eingeleitet durch die Zugabe von 2,5 g tert.-Butylperoxi-2-ethyl-hexanoat (Fa. Peroxid-Chemie GmbH). An der beginnenden Druckabnahme erkennbar, setzte die Polymerisation nach wenigen Minuten ein. Während der Polymerisation wurde ein Monomergemisch aus 60 Gew.% Vinylidenfluorid und 40 Gew.% Hexafluorpropen so nachgedrückt, daß der Autoklaveninnendruck konstant auf 34±0,4 bar gehalten wurde. Innerhalb einer Reaktionszeit von 455 min wurden auf diese Weise insgesamt 303 g Vinylidenfluorid und 196 g Hexafluorpropen nachdosiert. Nach Beendigung der Polymerisation wurde das nicht umgesetzte Monomergemisch durch Entspannung und Evakuierung aus dem Reaktor entfernt. Der verbleibende Reaktorinhalt, der als Lösung des Polymers in 1,1,1,3,3-Pentafluorpropan vorlag, wurde 15 min nach Abstellen des Rührers über ein Bodenablaßventil vollständig in ein zweites darunterliegendes Druckgefäß abgelassen. Die Polymerlösung wurde 24 h bei 60°C in einem Vakuumtrockenschrank getrocknet, wobei das Lösungsmittel in einer Kühlfalle kondensiert wurde, und 493 g eines zähflüssigen Copolymers resultierten.

Durch 19F-NMR-Analysen (Lösungsmittel: Aceton; Standard: CFCl₃) wurde folgende Copolymerzusammensetzung bestimmt: 22,7 mol.% Hexafluorpropen, 77.2 mol.% Vinylidenfluorid. Der durch Elementaranalyse bestimmte Bromgehalt des Polymers betrug 0,9 Gew.-% sowie der Chlorgehalt 0,2 Gew.-%.

Zur Bestimmung der Molekulargewichte wurden gelpermeationschromatografische Messungen (GPC) mit RI-Detektion in Dimethylacetamid (DMAC) unter Zusatz von 1 g/l LiBr bei 40°C durchgeführt. Die Auswertung erfolgte mit Hilfe einer speziellen Eichkurve für Polyethylenoxid, die durch Membranosmose-Messungen kalibriert worden ist. Die Zahlen- bzw. Gewichtsmittel der Molekulargewichte (Mn, Mw) sind in Tabelle 1 zusammengetragen.

### Beispiel 2

Die Polymerisation wurde in analoger Weise wie im Beispiel 1 durchgeführt, jedoch mit 12,0 g Diiodmethan als Kettenübertragungsmittel anstelle von 1,2-Dibromchlortrifluorethan sowie einer Zugabe von 2,21 g tert.-Butylperoxi-2-ethyl-hexanoat zum Reaktionsstart und 1,1 g, nachdem insgesamt 300 g Monomere nachdosiert worden sind.

Innerhalb einer Reaktionszeit von 1032 min wurden insgesamt 412 g Vinylidenfluorid und 264 g Hexafluorpropen nachdosiert. Durch analoge Aufarbeitung wie im Beispiel 1 konnten 714 g eines zähflüssigen Copolymers isoliert werden.

Die Copolymerzusammensetzung beträgt 77,8 mol-% Hexafluorpropen, 22,2 mol-% Vinylidenfluorid. Der Iodgehalt des Polymers liegt bei 1,45 Gew.-%.

Tabelle 1 enthält die Ergebnisse der GPC-Analytik.

Zur Herstellung einer vernetzungsfähigen Mischung wurden auf einem gut gekühlten Zweiwalzenmischwerk auf 100 Gew.-Teile des Fluorkautschukcopolymers 30 Teile Ruß MT N 990, 3 Teile Calciumhydroxid, 4 Teile Perkalink 301/50 (Triallylisocyanurat, 50 %ig auf Silicagel) sowie 3 Teile Luperco 101 XL-45 (2,5-Dimethyl-2,5-bis(tertiärbutylperoxy)-hexan; 45%ig in inaktiven Füllstoffen) eingearbeitet.

Zur Bestimmung des Vernetzungsverhaltens wurde die peroxidhaltige Mischung in einem Monsanto-Rheometer des Typs MDR 2000 E bei 170°C untersucht (Meßzeit 30 min).

Die Mischung wurde bei 170°C und 200bar in Formen für 1x10x10 mm Platten 15 min druckvulkanisiert und anschließend in einem Umluftofen nachvulkanisiert (1 h bei 160°C, 1 h bei 170°C, 2 h bei 180°C und 20 h bei 230 °C). An den vulkanisierten Formkörpern wurden die Zug-/Dehnungseigenschaften bestimmt. Die Ergebnisse sind in Tabelle 2 aufgelistet.

### Beispiel 3

Die Polymerisation wurde in analoger Weise wie im Beispiel 1, jedoch ohne Zugabe eines Molekulargewichtsreglers, durchgeführt.

Innerhalb einer Reaktionszeit von 660 min wurden insgesamt 182 g Vinylidenfluorid und 116 g Hexafluorpropen nachdosiert. Durch analoge Aufarbeitung wie im Beispiel 1 konnten 292 g eines kautschukartigen Copolymers isoliert werden. Die Copolymerzusammensetzung betrug 77,8 mol-% VDF, 22,2 mol-% HFP. Tabelle 1 enthält die Ergebnisse der GPC-Analytik.

Zur Herstellung einer vernetzungsfähigen Mischung wurden auf einem gut gekühlten Zweiwalzenmischwerk auf 100 Gew.-Teile des Fluorkautschukcopolymers 30 Teile Ruß MT N 990, 6 Teile Calciumhydroxid, 3 Teile Magnesiumoxid (Maglite D) sowie 4 Teile einer Mischung aus Bisphenol AF und Viton A (50/50 Gew.-tle.) und 2 Teile einer Mischung aus Benzyltriphenylphosphoniumchlorid mit Viton A (33/66 Gew.-tle.) eingearbeitet.

Die Ergebnisse des Vulkanisationsversuches sind ebenso in Tabelle 2 aufgeführt.

### Beispiel 4

In analoger Weise wie im Beispiel 1 wurden unter Kühlung des 4,1 -1-Autoklaven auf ≤ 5°C 1155 g 1,1,1,3,3-Pentafluorpropan, 0,3 g tert.-Butylperoxi-2-ethyl-hexanoat und 18 g Diiodmethan sowie ein Monomergemisch aus 416 g Vinylidenfluorid, 1170 g Hexafluorpropen und 71 g Tetrafluorethylen vorgelegt. Nach Erwärmen des Reaktionsgemisches auf 80°C betrug der Autoklaveninnendruck 34 bar. Nach einer Reaktionszeit von 3 h bei 80°C wurden 19,9 ml einer Lösung aus tert.-Butylperoxi-2-ethyl-hexanoat in 1,1,1,3,3-Pentafluorpropan (50 g/l) zudosiert. Zur Konstanthaltung des Anfangsdrucks wurde ein Monomergemisch bestehend aus 53 Gew.-% Vinylidenfluorid, 34 Gew.-% Hexafluorpropen sowie 13 Gew.-% Tetrafluorethylen nachdosiert. Nach insgesamt 300 bzw. 600g Monomernachdosierung wurden jeweils weitere 12,4 ml der oben beschriebenen Peroxidlösung zugegeben.

Innerhalb einer Reaktionszeit von 859 min wurden insgesamt 599 g Vinylidenfluorid, 283 g Hexafluorpropen und 108 g Tetrafluorethylen verbraucht. Durch analoge Aufarbeitung wie im Beispiel 1 konnten 1025 g eines zähflüssigen Copolymers isoliert werden.

Die Copolymerzusammensetzung betrug 70,8 mol-% VDF, 18,4 mol-% HFP sowie 10,8 mol-% TFE. Der Iodgehalt lag bei 1,6 Gew.-%.

### Beispiel 5

In analoger Weise wie in den vorangegangenen Beispielen wurden im 4,1-1-Autoklaven 836 g 1,1,1,3,3-Pentafluorpropan, 660 g Vinylidenfluorid vorgelegt. Die Polymerisation wurde bei 80°C und einem Druck von 41 bar durch Zugabe von 2,5 g tert.-Butylperoxi-2-ethyl-hexanoat gestartet. Unter Konstanthaltung des Autoklaveninnendrucks wurden innerhalb von 20 h 394 g Vinylidenfluorid nachdosiert.

Es wurden 408 g eines VDF-Hompolymer-Pulvers isoliert, das in der DSC einen Schmelzpunkt bei 167°C zeigt.

### Vergleichsbeispiel 1

### Substanzpolymerisation

In einem durch mehrmaliges Evakuieren und mit Stickstoff Entspannen inertiserten 4,1-1-Autoklaven wurden 15,3 g Diiodperfluorbutan (DIPFB, Fluorochem Ltd., nach vorheriger Reinigung durch Ausschütteln mit wäßriger Natriumthiosulfatlösung), 771 g VDF und 2118 g HFP vorgelegt und unter Rühren auf 60°C erwärmt. Nach Erreichen dieser Temperatur betrug der Autoklaveninnendruck 37,7 bar. Die Polymerisation wurde eingeleitet durch die Zugabe von 4,25 g tert.-Butylperoxipivalat in Form von TBPPI-75-AL (Lösung in Aliphaten, Peroxidgehalt von 47,1%, Fa. Peroxid-Chemie GmbH).

Innerhalb einer Reaktionszeit von 1779 min wurden insgesamt 308 g Vinylidenfluorid und 202 g Hexafluorpropen nachdosiert. Nach Beendigung der Polymerisation wurde das nicht umgesetzte Monomergemisch durch Entspannung und Evakuierung aus dem Reaktor entfernt. Das Polymer konnte nicht wie in den Beispielen 1-3 durch einfaches Ablassen aus dem Autoklaven ausgetragen werden. Das Polymer wurde mit Hilfe von 3 1 Aceton herausgelöst und aus dieser Lösung mit n-Hexan gefällt. Nach Trocknung wurden 481 g eines zähflüssigen Copolymers mit einer Zusammensetzung von 76,7 mol-% VDF und 23,3 mol-% HFP sowie 1 Gew.-% Iod erhalten.

In analoger Weise wie im Beispiel 1 wurde eine vulkanisierfähige Mischung hergestellt. Die Ergebnisse sind ebenso in Tabelle 2 aufgeführt.

Dieses Vergleichsbeispiel zeigt, daß bei einer Polymerisation in reiner flüssiger Monomerphase trotz erheblich größerer Monomervorlage eine deutlich niedrigere Raum-Zeit-Ausbeute erzielt wird und der Produktaustrag große Probleme bereitet. Zudem wird offensichtlich die Kettenübertragung erschwert, was sich durch einen niedrigeren Iodeinbau und schlechtere Vemetzbarkeit äußert.

### Vergleichsbeispiel 2

### (Verwendung eines alternativen Fluorkohlenwasserstoffes: 1,1,1,4,4,4-Hexafluorbutan als Polymerisationsmedium, analog US-A-5 182 342)

Die Polymerisation wurde in analoger Weise wie im Beispiel 2 durchgeführt, wobei anstelle des 1,1,1,3,3-Pentafluorpropans 829 g 1,1,1,4,4,4-Hexafluorbutan eingesetzt worden sind. Der Autoklaveninnendruck betrug 29 bar nach Monomervorlage und Erreichen der Reaktionstemperatur von 80°C.

Innerhalb einer Reaktionszeit von 1320 min wurden insgesamt 214 g Vinylidenfluorid und 147 g Hexafluorpropen nachdosiert.

Das Reaktionsgemisch lag wie in den Beispielen 1 und 2 nach Entfernen des Restmonomers als einheitliche Polymerlösung vor, aus der das Lösungsmittel abdestilliert wurde. Es resultierten 387 g eines Copolymers mit 78,1 mol-% VDF und 21,9 mol-% HFP sowie einem Iodgehalt von 2,2 Gew.-%.

In analoger Weise wie im Beispiel 1 wurde eine vulkaniserfähige Mischung hergestellt. Die Ergebnisse sind ebenso in Tabelle 2 aufgeführt.

Dieses Vergleichsbeispiel zeigt, daß bei Einsatz eines Fluorkohlenwasserstoffes, der sich von den erfindungsgemäßen durch die Verteilung der Wasserstoffatome unterscheidet, die Raum-Zeit-Ausbeute deutlich geringer ist.

### Vergleichsbeispiel 3

### Polymerisation analog Beispiel 2 unter Verwendung von Trifluorethanol (in US-A 5 182 342 in Beispielen 7, 25, 26 verwendet)

In analoger Weise wie im Beispiel 1 wurden im 4,1-1-Autoklaven 438 g 2,2,2-Trifluorethanol und 7,6 g Diiodperfluorbutan sowie ein Monomergremisch aus 289 g Vinylidenfluorid und 666 g Hexafluorpropen vorgelegt. Nach Erwärmen des Reaktionsgemisches auf 80°C betrug der Autoklaveninnendruck 35 bar. Durch Zugabe von 1,24 g tert.-Butylperoxi-2-ethyl-hexanoat wurde die Polymerisation eingeleitet. Nach anfänglicher zügiger Reaktion kam die Reaktion nach etwa 10 h zum Erliegen. Bis dahin wurden 102 g Vinylidenfluorid und 44 g Hexafluorpropen zur Konstanthaltung des Autoklaveninnendrucks nachdosiert.

Nach 20 h wurde der Versuch abgebrochen, das nicht umgesetzte Monomergemisch entspannt und das Reaktionsgemisch abgelassen. Das resultierende Polymer lag nicht im Trifluorethanol gelöst, sondern als gequollene separate Phase vor. Die Ausbeute betrug 185 g eines zähflüssigen Copolymers.

Dieses Vergleichsbeispiel zeigt, daß sich Trifluorethanol während der Polymerisation offenbar nicht ausreichend inert verhält und Nebenreaktionen stattfinden, die zum Reaktionsabbruch führen.

**Tabelle 1:**

| GPC-Ergebnisse | | | |
|---|---|---|---|
| Beispiel | 1 | 2 | 3 |
| Mn | 15,5 | 17,4 | 39,6 |
| Mw | 28,5 | 27,1 | 68,4 |

**Tabelle 2:**

| Vulkanisationsergebnisse und Eigenschaften der Vulkanisate | | | | | |
|---|---|---|---|---|---|
| Beispiel | 2 | 3 | 4 | | |
| Vergleichsbeispiel | | | | 1 | 2 |
| MDR-Ergebnisse | | | | | |
| s'min [dNm] | 0,02 | 0,06 | 0,01 | 0,03 | 0.02 |
| s'max [dNm] | 12,8 | 13,5 | 21,5 | 12,4 | 11,1 |
| tan δₘₐₓ | 0,09 | 0,15 | 0,08 | 0,16 | 0,07 |
| t 90 [min] | 6,4 | 2,2 | 6,5 | 4,6 | 9,2 |
| | | | | | |

| Mechanik | | | | | |
|---|---|---|---|---|---|
| Zugfestigkeit [N/mm²] | 10,9 | 10,0 | 12,6 | n.b. | 7,5 |
| Dehnung [%] | 172 | 256 | 164 | n.b. | 96 |
| S₅₀ [N/mm²] | 2,7 | 2,5 | 3,3 | n.b. | 3,4 |
| DVR (70h/200°C) [%] | 37 | 33 | 32 | n.b. | n.b. |
| n.b.: nicht bestimmt | | | | | |

## Patentansprüche

1. Verfahren zur Herstellung teilfluorierter Fluorpolymere, **dadurch gekennzeichnet, dass** entweder Vinylidenfluorid, oder Vinylidenfluorid und andere fluorierte oder nicht-fluorierte Monomere, oder aber fluorierte Monomere, die keinen Wasserstoff enthalten zusammen mit nicht-fluorierten Monomeren in Gegenwart von Fluorkohlenwasserstoffen der Formeln CF₃-CH₂-CF₂H, CF₃-CHF-CF₂H, CHF₂-CF₂-CH₂F, CF₃-CH₂-CF₂-CH₃ und/oder CF₃-CHF-CF₂-CH₃ sowie gegebenenfalls eines Molekulargewichtsreglers radikalisch polymerisiert werden.

2. Verfahren nach Anspruch 1, **dadurch gekennzeichnet, daß** zusätzlich Wasser zugegen ist.

3. Verfahren nach Anspruch 1, **dadurch gekennzeichnet, daß** zusätzlich mindestens ein Initiator in Form von organischen oder fluororganischen Dialkylperoxiden, Diacylperoxiden, Dialkylperoxydicarbonaten, Alkylperestern und/oder Perketalen eingesetzt wird.

4. Verfahren nach Anspruch 1 oder 2, **dadurch gekennzeichnet, daß** als Molekulargewichtsregler mindestens eine Verbindung der Formel (III)
R³BrₐI_{b} (III)
mit a bzw. b = 0 bis 2 und a + b = 1 oder 2,
wobei R³ ein aliphatischer Kohlenwasserstoff , Fluorkohlenwasserstoff-, Fluorchlorkohlenwasserstoff- oder Fluorkohlenstoffrest mit 1-8 Kohlenstoffatomen sein kann, eingesetzt wird.

5. Verwendung von 1,1,1,3,3-Pentafluorpropan als Prozeßlösungsmittel für die Polymerisation von Fluormonomeren.

6. Verwendung von Fluorkohlenwasserstoffen der Formeln CF₃-CH₂-CF₂H, CF₃-CHF-CF₂H, CHF₂-CF₂-CH₂F, CF₃-CH₂-CF₂-CH₃ und/oder CF₃-CHF-CF₂-CH₃ enthaltenden Fluorpolymerlösung erhalten aus der radikalischen Polymerisation von entweder Vinylidenfluorid, oder Vinylidenfluorid und andere fluorierte oder nicht-fluorierte Monomere, oder aber fluorierte Monomere, die keinen Wasserstoff enthalten zusammen mit nicht-fluorierten Monomeren in Gegenwart von Fluorkohlenwasserstoffen der Formeln CF₃-CH₂-CF₂H, CF₃-CHF-CF₂H, CHF₂-CF₂-CH₂F, CF₃-CH₂-CF₂-CH₃ und/oder CF₃-CHF-CF₂-CH₃ sowie gegebenenfalls eines Molekulargewichtsreglers als Beschichtungsmaterial.

## Claims

1. A process for the production of partially fluorinated fluoropolymers, **characterised in that** either vinylidene fluoride or vinylidene fluoride and other fluorinated or non-fluorinated monomers, or alternatively fluorinated monomers which contain no hydrogen together with non-fluorinated monomers, are free-radically polymerised in the presence of fluorinated hydrocarbons of the formulae CF₃-CH₂-CF₂H, CF₃-CHF-CF₂H, CHF₂-CF₂-CH₂F, CF₃-CH₂-CF₂-CH₃ and/or CF₃-CHF-CF₂-CH₃, and optionally a chain-transfer agent.

2. A process according to claim 1, **characterised in that** water is additionally present.

3. A process according to claim 1, **characterised in that** at least one initiator in the form of organic or fluoroorganic dialkyl peroxides, diacyl peroxides, dialkyl peroxydicarbonates, alkyl peresters and/or perketals is additionally used.

4. A process according to claim 1 or 2, **characterised in that** at least one compound of the formula (III)
R³BrₐI_{b} (III)
where a and b = 0 to 2 and a + b = 1 or 2,
wherein R³ may be an aliphatic hydrocarbon, fluorinated hydrocarbon, chlorofluorocarbon or fluorocarbon residue having 1-8 carbon atoms, is used as a chain-transfer agent.

5. Use of 1,1,1,3,3-pentafluoropropane as process solvent for the polymerisation of fluoromonomers.

6. Use of a fluoropolymer solution containing fluorinated hydrocarbons of the formulae CF₃-CH₂-CF₂H, CF₃-CHF-CF₂H, CHF₂-CF₂-CH₂F, CF₃-CH₂-CF₂-CH₃ and/or CF₃-CHF-CF₂-CH₃ obtained by the free-radical polymerisation of either vinylidene fluoride or vinylidene fluoride and other fluorinated or non-fluorinated monomers, or alternatively fluorinated monomers which contain no hydrogen together with non-fluorinated monomers in the presence of fluorinated hydrocarbons of the formulae CF₃-CH₂-CF₂H, CF₃-CHF-CF₂H, CHF₂-CF₂-CH₂F, CF₃-CH₂-CF₂-CH₃ and/or CF₃-CHF-CF₂-CH₃, and optionally a chain-transfer agent as a coating material.

## Revendications

1. Procédé de fabrication de fluoropolymères, partiellement fluorés, **caractérisé en ce que** soit du fluorure de vinydilène ou du fluorure de vinydilène et d'autres monomères fluorés ou non, soit des monomères fluorés qui ne contiennent pas d'hydrogène, combinés avec des monomères non-fluorés sont polymérisés par radicaux en présence d'hydrocarbures fluorés de formules CF₃-CH₂-CF₂H, CF₃-CHF-CF₂H, CHF₂-CF₂-CH₂F, CF₃-CH₂-CF₂-CH₃ et / ou CF₃-CHF-CF₂-CH₃ et le cas échéant, d'un régulateur de poids moléculaire.

2. Procédé selon la revendication 1, **caractérisé en ce que** de l'eau est présente.

3. Procédé selon la revendication 1, **caractérisé en ce qu'**au moins un amorceur supplémentaire est utilisé sous forme de péroxydes de dialkyle, de dialcyle, des Peroxydicarbonates de dialkyle, des peresters d'alkyles et / ou perkétales.

4. Procédé selon l'une des revendication 1 ou 2, **caractérisé en ce qu'**au moins une liaison de formule (III) est utilisée comme régulateur du poids moléculaire
R³BrₐI_{b} (III)
Avec a ou b = 0 à 2 et a+b= 1 ou 2,
où R³ peut être un résidu aliphatique d'hydrocarbure, d'hydrocarbure fluoré, d'hydrocarbure chlorofluoré ou d'hydrocarbure chlorofluoré avec 1-8 atomes de carbone.

5. Utilisation de 1,1,1,3,3-pentafluoropropane comme solvant du processus pour la polymérisation des fluoromonomères.

6. Utilisation d'hydrocarbures fluorés de la solution fluoropolymère contenant les formules CF₃-CH₂-CF₂H, CF₃-CHF-CF₂H, CHF₂-CF₂-CH₂F, CF₃-CH₂-CF₂-CH₃ et / ou CF₃-CHF-CF₂-CH₃ obtenue à partir de la polymérisation radicalaire soit du fluorure de vinydilène ou du fluorure de vinydilène et d'autres monomères fluorés ou non, soit des monomères fluorés qui ne contiennent pas d'hydrogène, combinés avec des monomères non-fluorés sont polymérisés par radicaux en présence d'hydrocarbures fluorés de formules CF₃-CH₂-CF₂H, CF₃-CHF-CF₂H, CHF₂-CF₂-CH₂F, CF₃-CH₂-CF₂-CH₃ et / ou CF₃-CHF-CF₂-CH₃ et le cas échéant, d'un régulateur de poids moléculaire.
